# EUROPEAN PATENT APPLICATION

(11) **EP 3 176 408 A1**
(43) Date of publication of application: **07.06.2017**
(21) Application number: 16199368.8
(22) Date of filing: 17.11.2016
(51) Int. Cl.: F02C 7/143, F02C 9/18, F04D 27/02, F02C 7/18

(54) **INTERCOOLING SYSTEM AND METHOD FOR A GAS TURBINE ENGINE**

(30) Priority: 03.12.2015 US 201514957910
(71) Applicant: General Electric Company, Schenectady, NY 12345 (US)
(72) Inventor: SENNOUN, Mohammed El Hacin, West Chester, OH 45069 (US); BUNKER, Ronald Scott, Placitas, NM 87043 (US)
(74) Representative: Williams, Andrew Richard

(57) **Abstract**

A system and method of cooling a gas turbine engine 10 having a compressor with multiple, axially arranged stages 52, 54 of paired rotating blades 56, 58 and stationary vanes 60,62 located between an outer compressor casing 82 and inner compressor casing 80, comprising a closed loop cooling of the compressor by extracting compressor air 92 from a first location in the compressor, cooling the extracted air 94, and introducing the cooled, extracted air 94 at a second location in the compressor, with the second location being upstream of the first location.

## Description

Turbine engines, and particularly gas or combustion turbine engines, are rotary engines that extract energy from a flow of gases passing through the engine in a series of compressor stages, which include pairs of rotating blades and stationary vanes, through a combustor, and then onto a multitude of turbine stages. In the compressor stages, the blades are supported by posts protruding from the rotor while the vanes are mounted to a stator casing. Gas turbine engines have been used for land and nautical locomotion and power generation, but are most commonly used for aeronautical applications such as for airplanes, including helicopters. In airplanes, gas turbine engines are used for propulsion of the aircraft.

Gas turbine engines for aircraft are designed to operate at high temperatures to maximize engine thrust, so cooling of certain engine components, such as vanes is necessary during operation. It is desirable to increase the thermal capacity of the compressor to perform desirable thermal management of the engine system.

In one aspect, embodiments of the invention relate a method of cooling a gas turbine engine compressor having multiple, axially arranged stages of paired rotating blades and stationary vanes located between an outer compressor casing and inner compressor casing. The method includes extracting compressor air from a downstream stage of the compressor then passing the extracted air through a heat exchanger to cool the extracted air and then introducing the cooled extracted air into an upstream stage of the compressor.

In another aspect, embodiments of the invention relate to a compressor for a gas turbine engine including multiple, axially flow arranged stages of paired rotating blades and stationary vanes, a heat exchanger, and a cooling circuit passing through the heat exchanger. An inlet, fluidly coupled to a stage of the compressor and an outlet fluidly coupled to an upstream stage relative to the stage, enables compressor air to be extracted through the inlet, passed through the heat exchanger for cooling, after which the cooled extracted air is introduced through the outlet to the upstream stage.

In the drawings:
Figure 1 is a schematic, sectional view of a gas turbine engine according to an embodiment of the invention.
Figure 2 is a schematic of a compression section of the gas turbine engine of Figure 1 with intercooling of some of the compressor stages.
Figure 3 is another embodiment of Figure 2.
Figure 4 is a further embodiment of Figure 2.
Figure 5 is a flow chart of a method for cooling a gas turbine engine.

The described embodiments of the present invention are directed to systems, methods, and other devices related to routing air flow in a turbine engine. For purposes of illustration, the present invention will be described with respect to an aircraft gas turbine engine. It will be understood, however, that the invention is not so limited and may have general applicability in non-aircraft applications, such as other mobile applications and non-mobile industrial, commercial, and residential applications.

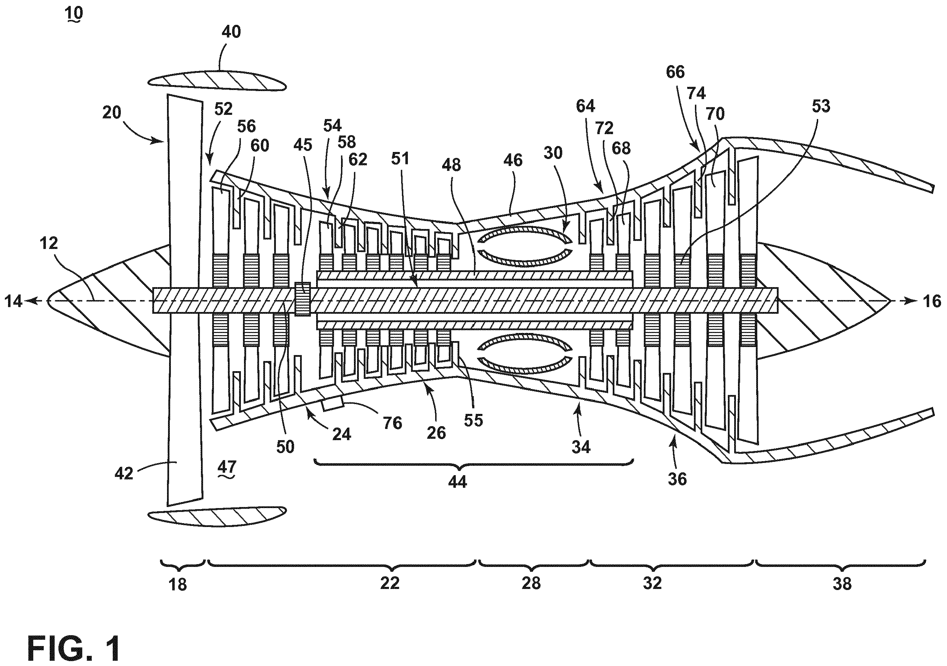

Figure 1 is a schematic cross-sectional diagram of a gas turbine engine, which can comprise a high-bypass gas turbine engine 10, for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38. The compressor section 22, combustion section 28, and turbine section 32 are in axial flow arranged and enclosed within a core casing 46. The compressor is not limited to an axial orientation and can be oriented axially, radially, or in a combined manner.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by the core casing 46, which can be coupled with the fan casing 40. At least a portion of the fan casing 40 encircles the core casing 46 to define an annular bypass channel 47.

A HP drive shaft or spool 48 disposed coaxially about the centerline 12 of the engine 10 drivingly connects the HP turbine 34 to the HP compressor 26. A LP drive shaft or spool 50, which is disposed coaxially about the centerline 12 of the engine 10 within the larger diameter annular HP spool 48, drivingly connects the LP turbine 36 to the LP compressor 24 and fan 20. The portions of the engine 10 mounted to and rotating with either or both of the spools 48, 50 are also referred to individually or collectively as a rotor 51.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle), each set comprising a pair, to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in Figure 1 were selected for illustrative purposes only, and that other numbers are possible. The blades 56, 58 for a stage of the compressor can be mounted to a disk 53, which is mounted to the corresponding one of the HP and LP spools 48, 50, with each stage having its own disk. The vanes 60, 62 are mounted to the core casing 46 in a circumferential arrangement about the rotor 51.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in Figure 1 were selected for illustrative purposes only, and that other numbers are possible.

The LP compressor 24 and the HP compressor 26 can further include at least one guide vane which can be an inlet guide vane 55 positioned on the upstream end of the compressor section 22 and an outlet guide vane 57 positioned on the downstream end of the compressor section 22. The vanes are not limited to one type and can be for example non-variable stator vanes or stator vanes.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 can bypass the engine core 44 as a bypass air flow and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28.

Hot portions of the engine also exist within the compressor section 22 and therefore the ambient air supplied by the fan 20 or cooler air from the compressor can be utilized, but not limited to, cooling portions of the compressor section 22. The bypass air flow can pass through a heat exchanger 76, which can be any device suitable for example a surface cooler, having a flat shape or a brick cooler, comprising a bar and plate heat exchanger or a tube and shell cooler, having a cylinder shape, which can be located within the bypass air flow of the bypass channel 47. Though illustrated within the bypass channel 47, the location of the heat exchanger 76 is not limited to the bypass channel and can be located at any suitable position within the engine 10 for example adjacent an inlet or outlet guide vane 55, 57.

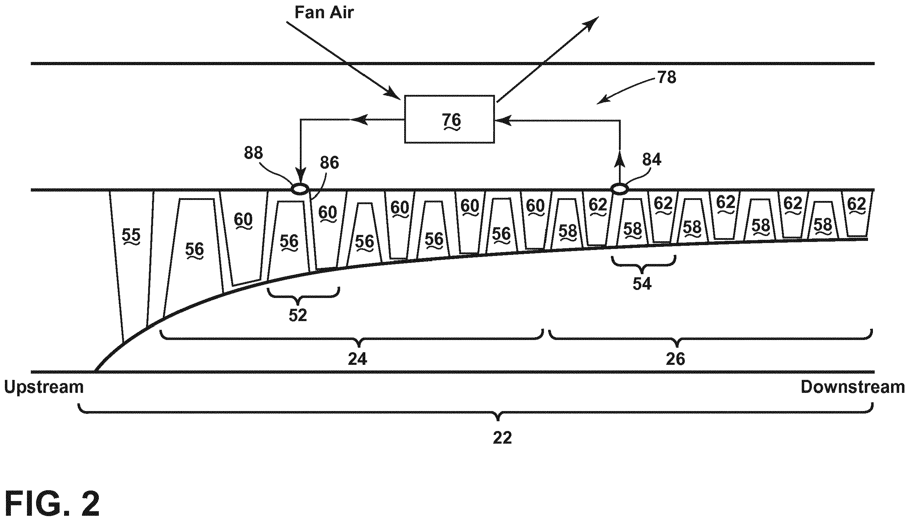

Referring to Figure 2, a schematic of the compressor section 22 further illustrates an inner compressor casing 80 comprising, the rotor 51, and an outer compressor casing 82 disposed within the core casing 46. The multiple, axially arranged stages 52, 54 of paired rotating blades 56, 58 and stationary vanes 60, 62 are located between the outer compressor casing 82 and the inner compressor casing 80. A cooling circuit 78 comprises an inlet 84 fluidly coupled to a first portion of the compressor 26. The inlet 84 is located adjacent the outer compressor casing 82, adjacent the tip of the blade 58, and adjacent an end wall 86 of the vane 62. The first portion can be in a downstream stage 54 of the compressor 26 or any suitable area upstream of the blades 58 for the downstream stage 54 and downstream of the vanes 62 for the upstream stage 52.

The cooling circuit 78 further comprises an outlet 88 fluidly coupled to a second portion located upstream of the first portion of the compressor 26. The outlet 88 is located adjacent the outer compressor casing 82, adjacent the tip of the blade 56, and adjacent the end wall 86 of the vane 60. The second portion can be an upstream stage 52 of the compressor 24 or any suitable area upstream of the blades 56 for the upstream stage 52 and upstream of the vanes 62 for the downstream stage 52.

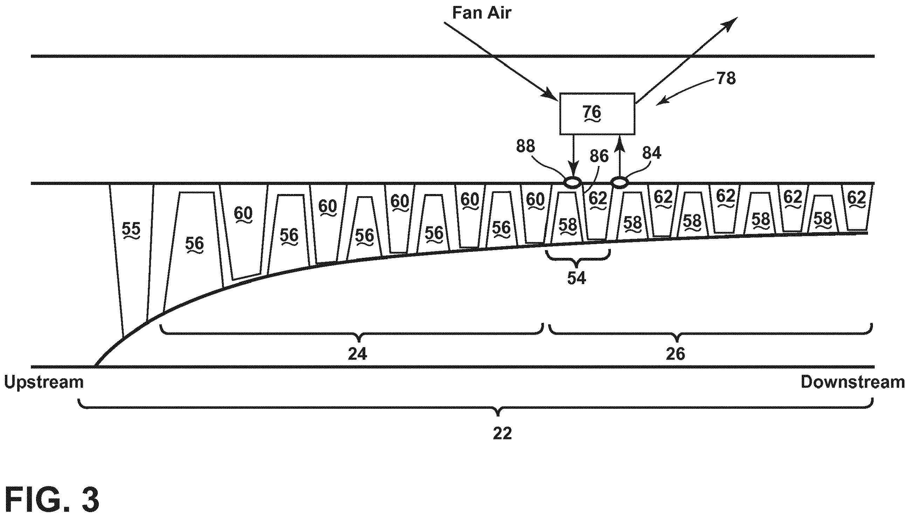

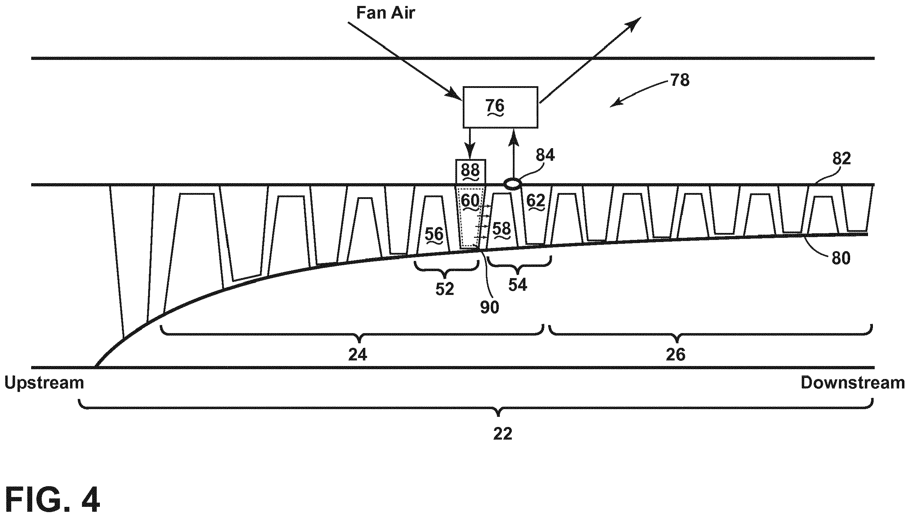

The first and second portions can be at any downstream/upstream relative location along the compressor, at any stage in the compressor as long as the relative position is correct. The first and second portions can be at different stages of the compressor or at the same stage of the compressor. For example as shown in Figure 3, the first and second portion can be portions adjacent the vanes and blades within the same compressor stage 54. The first and second portions can also be coupled to an interior of any of the airfoil elements, such as the vanes. For example as shown in Figure 4, the first portion is downstream of a blade 58 and the second portion is upstream of the blade 58 and coupled to the interior 90 of a vane 60.

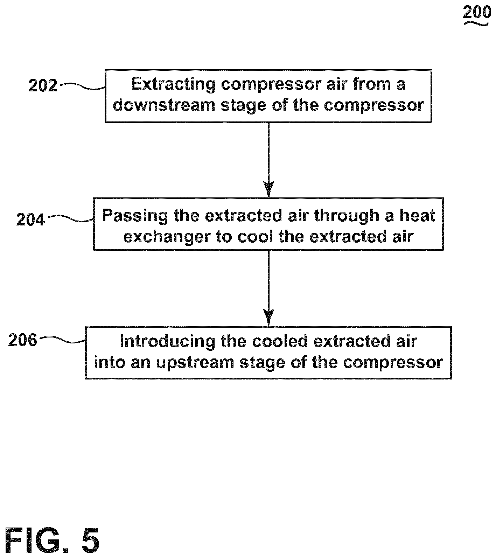

Figure 5 further illustrates a method 200 of cooling a gas turbine engine 10 using the cooling circuit 78 which passes through the heat exchanger 76. In a first step 202, compressor air 92 is extracted from the first portion of the compressor 26 through the inlet 84. Secondly 204 the compressor air 92 flows through the heat exchanger 76 to form cooled extracted air 94. In a final step 206, the cooled extracted air 94 is introduced through the outlet 88 to the second portion located upstream of the first portion of the compressor 26.

The heat exchanger 76 cools the compressor air 92 in order to form cooled extracted air 94, which in turn is used to cool areas in the upstream stage 52 of the compressor 26 including but not limited to the interior 90 of the vanes 60, 62. In still another embodiment the heat exchanger 76 can be used to transfer energy to or from a closed loop refrigerant system in which the closed loop coolant is then used for other thermal management cooling or heating purposes.

Figures 2-4 include a cooling fluid which can be fan air 95. The fan air 95 passes through the heat exchanger 76 to cool the compressor air 92. The extracted compressor air 92 can also be alternately routed air 96 directed to the fan or outlet guide vane region and passed through other heat exchangers such as brick coolers and surface coolers.

An optional flow control device, for example, but not limited to, a control valve, can be included in the loop such that coolant flow can be either on, off, or modulated depending on operating conditions.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method of operating a gas turbine engine compressor having multiple, stages of paired rotating blades and stationary vanes located between an outer compressor casing and inner compressor casing, the method comprising:
   extracting compressor air from a downstream stage of the compressor;
   passing the extracted air through a heat exchanger to cool the extracted air; and
   introducing the cooled extracted air into an upstream stage of the compressor.
2. The method of clause 1, wherein the extracting comprises extracting compressor air upstream of the blades for the downstream stage and downstream of the vanes for the upstream stage.
3. The method of any preceding clause, wherein the extracting comprises extracting compressor air adjacent the outer compressor casing.
4. The method of any preceding clause, wherein the extracting comprises extracting the air adjacent a tip of the blades of the downstream stage.
5. The method of any preceding clause, wherein the extracting comprises extracting the air adjacent an end wall of the vanes of the downstream stage.
6. The method of any preceding clause, wherein the introducing comprises introducing the cooled extracted air upstream of the blades for the upstream stage and upstream of the vanes for the downstream stage.
7. The method of any preceding clause, wherein the introducing comprises introducing the cooled extracted air adjacent the outer compressor casing.
8. The method of any preceding clause, wherein the introducing comprises introducing the cooled extracted air adjacent a tip of the blades of the upstream stage.
9. The method of any preceding clause, wherein the introducing comprises introducing the cooled extracted air adjacent an end wall of the vanes of the upstream stage.
10. The method of any preceding clause, wherein the introducing comprises introducing the cooled extracted air through an interior of the vanes of the upstream stage.
11. The method of any preceding clause, wherein:
   the extracting comprises extracting compressor air from at least one of:
      a) upstream of the blades for the downstream stage and downstream of the vanes for the upstream stage,
      b) adjacent the outer compressor casing,
      c) adjacent a tip of the blades of the downstream stage,
      d) adjacent an end wall of the vanes of the downstream stage, and
   the introducing comprises introducing the cooled extracted air into at least one of:
      a) upstream of the blades for the upstream stage and upstream of the vanes for the downstream stage,
      b) adjacent the outer compressor casing,
      c) adjacent a tip of the blades of the upstream stage,
      d) adjacent an end wall of the vanes of the upstream stage, and
      e) through an interior of the vanes of the upstream stage.
12. A compressor for a gas turbine engine comprising:
   multiple, flow arranged stages of paired rotating blades and stationary vanes;
   a heat exchanger; and
   a circuit passing through the heat exchanger and having an inlet fluidly coupled to a downstream stage of the compressor and an outlet fluidly coupled to a stage, upstream of the downstream stage;
   wherein compressor air is extracted through the inlet downstream of the upstream stage, passed through the heat exchanger for cooling, and the cooled extracted air is introduced through the outlet to the upstream stage.
13. The compressor of any preceding clause, wherein the inlet is located upstream of the blades for the downstream stage and downstream of the vanes for the upstream stage.
14. The compressor of any preceding clause, wherein the inlet is located adjacent an outer compressor casing.
15. The compressor of any preceding clause, wherein the inlet is located adjacent a tip of the blades of the downstream stage.
16. The compressor of any preceding clause, wherein the inlet is adjacent an end wall of the vanes of the downstream stage.
17. The compressor of any preceding clause, wherein the outlet is located upstream of the blades for the upstream stage and upstream of the vanes for the downstream stage.
18. The compressor of any preceding clause, wherein the outlet is located adjacent an outer compressor casing.
19. The compressor of any preceding clause, wherein the outlet is located adjacent a tip of the blades of the upstream stage.
20. The compressor of any preceding clause, wherein the outlet is located adjacent an end wall of the vanes of the upstream stage.
21. The compressor of any preceding clause, wherein the introducing comprises introducing the cooled extracted air through an interior of the vanes of the upstream stage.
22. A method of operating a gas turbine engine compressor having multiple, arranged stages of paired rotating blades and stationary vanes located between an outer compressor casing and inner compressor casing, the method comprising extracting compressor air from a first location in the compressor, cooling the extracted air, and introducing the cooled, extracted air at a second location in the compressor, with the second location being upstream of the first location.
23. The method of any preceding clause, wherein:
   the extracting from the first location comprises at least one of extracting:
      a) upstream of blades for a downstream stage and downstream of the vanes for an upstream stage,
      b) adjacent the outer compressor casing,
      c) adjacent a tip of the blades of a stage,
      d) adjacent an end wall of the vanes of a downstream stage, and
   the introducing at the second location comprises at least one of:
      a) downstream of vanes for an upstream stage and upstream of blades for a downstream stage,
      b) adjacent the outer compressor casing,
      c) adjacent a tip of the blades of an upstream stage,
      d) adjacent an end wall of the vanes of an upstream stage, and
      e) through an interior of the vanes of an upstream stage.
24. A compressor for a gas turbine engine comprising:
   multiple, flow arranged stages of paired rotating blades and stationary vanes;
   a heat exchanger; and
   a cooling circuit passing through the heat exchanger and having an inlet fluidly coupled to a first portion of the compressor and an outlet fluidly coupled to a second portion, upstream of the first portion;
   wherein compressor air is extracted through the inlet, passed through the heat exchanger for cooling, and the cooled extracted air is introduced through the outlet to the second portion.
25. The compressor of any preceding clause, wherein the inlet is adjacent the vanes of a stage and the outlet is adjacent the blades of a stage.
26. The compressor of any preceding clause, wherein the vanes and blades are of the same stage.
27. The compressor of any preceding clause, wherein the vanes are of downstream stage and the blades are of a upstream stage.
28. The compressor of any preceding clause, wherein:
   the inlet is located at least one of:
      a) downstream of the blades,
      b) adjacent an outer compressor casing,
      c) downstream of the vanes
      d) adjacent an end wall of the vanes, and the outlet is located at least one of:
         a) upstream of the blades
         b) upstream of the vanes,
         c) adjacent an outer compressor casing,
         d) adjacent a tip of the blades,
         e) through an interior of the vanes.

## Claims

1. A method of operating a gas turbine engine (10) compressor (24, 26) having multiple, stages (52, 54) of paired rotating blades (56, 58) and stationary vanes (60, 62) located between an outer compressor casing (82) and inner compressor casing (80), the method comprising:
extracting compressor air (92) from a downstream stage (52, 54) of the compressor (24, 26);
passing the extracted air through a heat exchanger to cool the extracted air; and
introducing the cooled extracted air into an upstream stage (52, 54) of the compressor (24, 26).

2. The method of claim 1, wherein the extracting comprises extracting compressor air (92) upstream of the blades (56, 58) for the downstream stage (52, 54) and downstream of the vanes (60, 62) for the upstream stage (52, 54).

3. The method of any preceding claim, wherein the extracting comprises extracting compressor air (92) adjacent the outer compressor casing (82).

4. The method of any preceding claim, wherein the extracting comprises extracting the air adjacent a tip of the blades (56, 58) of the downstream stage (52, 54).

5. The method of any preceding claim, wherein the extracting comprises extracting the air adjacent an end wall of the vanes (60, 62) of the downstream stage (52, 54).

6. The method of any preceding claim, wherein the introducing comprises introducing the cooled extracted air (94) upstream of the blades (56, 58) for the upstream stage (52, 54) and upstream of the vanes (60, 62) for the downstream stage (52,54).

7. The method of any preceding claim, wherein the introducing comprises introducing the cooled extracted air (94) adjacent the outer compressor casing (82).

8. The method of any preceding claim, wherein the introducing comprises introducing the cooled extracted air (94) adjacent a tip of the blades (56, 58) of the upstream stage (52, 54).

9. The method of any preceding claim, wherein the introducing comprises introducing the cooled extracted air (94) adjacent an end wall of the vanes (60, 62) of the upstream stage (52, 54).

10. The method of any preceding claim, wherein the introducing comprises introducing the cooled extracted air (94) through an interior (90) of the vanes (60, 62) of the upstream stage (52, 54).
